# FASCICULE DE BREVET EUROPEEN

(11) **EP 3 861 215 B1**
(45) Date de publication et mention de la délivrance du brevet: **06.07.2022**
(21) Numéro de dépôt: 19797325.8
(22) Date de dépôt: 01.10.2019
(51) Int. Cl.: F04F 13/00, F04B 17/03, F04B 9/10, F04B 23/06, F04B 53/00, F04B 53/16, F03C 1/06, F03C 1/013, F03C 1/26, F03C 1/08, B01D 61/02, B01D 61/06, B01D 61/08, C02F 1/44, C02F 103/08

(54) **ÉCHANGEUR DE PRESSION VOLUMÉTRIQUE À EFFET BOOSTER ET MESURE DE DÉBIT INTEGRÉE, POUR UNE INSTALLATION DE DESSALEMENT D'EAU DE MER**
VOLUMETRISCHER DRUCKTAUSCHER MIT BOOSTER-EFFEKT UND INTEGRIERTER DURCHFLUSSMESSUNG FÜR EINE MEERWASSERENTSALZUNGSANLAGE
VOLUMETRIC PRESSURE EXCHANGER WITH BOOSTER EFFECT AND INTEGRATED FLOW MEASUREMENT, FOR A SEAWATER DESALINATION PLANT

(30) Priorité: 03.10.2018 FR 1871122
(43) Date de publication de la demande: 11.08.2021
(73) Titulaire: Giraud, Yves, 42360 Panissieres (FR)
(72) Inventeur: Giraud, Yves, 42360 Panissieres (FR)
(74) Mandataire: Cabinet Laurent & Charras
(86) Numéro de dépôt international: PCT/FR2019/052319
(87) Numéro de publication internationale: WO 2020/070435

(56) Documents cités:
- EP-A1- 2 368 624
- WO-A1-2018/060755
- FR-A1- 2 953 566
- FR-A1- 2 981 704

## Description

### DOMAINE TECHNIQUE

La présente invention concerne un échangeur de pression volumétrique à effet booster et mesure de débit intégrée, destiné à une installation de dessalement d'eau de mer par osmose inverse, ainsi qu'une installation de dessalement.

### ART ANTERIEUR

Dans les installations de dessalement d'eau de mer par osmose inverse, on alimente des membranes semi-perméables avec de l'eau de mer amenée à haute pression (entre 50 et 70 bars généralement). En sortie des MOI (membranes d'osmose inverse) on récupère d'une part l'eau dessalée (perméat) à pression proche de la pression atmosphérique, et d'autre part l'eau sursalée (concentrât). Le concentrât conserve la pression d'alimentation diminuée des pertes de charge au travers des membranes, suivant les installations et le colmatage des membranes cette perte peut varier de 1 à 4 bars.

Le pourcentage de perméat par rapport au débit d'eau d'alimentation est généralement compris entre 35 et 50%, ce pourcentage appelé taux de conversion varie principalement en fonction de la salinité de l'eau et de sa température.

Il est important de récupérer l'énergie mécanique contenue dans le concentrât avec le meilleur rendement possible et dans toutes les conditions de variation des pertes de charge et de variation du taux de conversion.

Il existe de nombreux dispositifs à pistons destinés à récupérer l'énergie contenue dans le concentrât sortant des MOI mais ils sont obligatoirement associés dans le processus global à des pompes de relevage de pression pour compenser les pertes de charge et à des dispositifs de contrôle des débits en entrées et sorties des récupérateurs pour adapter les taux de conversion.

Le document FR 2 981 704 illustre un échangeur de pression volumétrique conforme à celui de l'état de la technique.

### EXPOSE DE L'INVENTION

L'invention a pour objet un échangeur de pression volumétrique du type défini d'entrée, comprenant au moins une unité d'échange de pression, ladite unité d'échange de pression comprenant un corps cylindrique creux, un piston coulissant dans ledit corps, ledit piston comprenant une tête de piston avec joint étanche séparant l'intérieur du dit corps cylindrique en une chambre aval (eau brute) et une chambre amont (concentrât), ledit piston relié par une bielle au maneton d'un vilebrequin, ladite chambre aval étant munie d'un dispositif d'admission et de refoulement d'eau à traiter, ladite chambre amont étant munie d'une vanne à cinq voies constituée par les manivelles du vilebrequin entrainé par un moteur électrique piloté par un variateur de fréquence, ladite vanne comprenant deux orifices symétriques d'alimentation en concentrât pressurisé, deux orifices symétriques d'évacuation dudit concentrât et une ouverture de communication avec ladite chambre amont.

Selon un mode d'exécution, le vilebrequin distributeur comprend deux manivelles symétriques chacune à ouverture de mise en communication et fermeture réalisant un équilibrage des forces hydrauliques appliquées au vilebrequin.

Selon un mode d'exécution, l'étanchéité dynamique dudit vilebrequin distributeur est réalisée au moyen de bagues d'étanchéité à faible coefficient de frottement plaquées contre les manivelles du vilebrequin par tout moyen mécanique.

Selon un mode d'exécution, l'étanchéité dynamique dudit vilebrequin distributeur est réalisée au moyen de bagues d'étanchéité à faible coefficient de frottement plaquées contre les manivelles du vilebrequin par tout moyen hydraulique.

L'échangeur de pression volumétrique selon l'invention peut comprendre une pluralité d'unités d'échange de pression telles que décrites et idéalement cinq ou sept unités.

Selon un mode d'exécution, les moyens d'entraînement motorisés sont reliés par engrenages et chaque unité est calée angulairement pour répartir les débits sur 360°.

Le nombre d'unités de pression, l'alésage et la course des corps cylindriques sont définis en fonction du débit disponible de concentrât de l'installation, la vitesse de rotation de l'embiellage est ajustée automatiquement en fonction du débit souhaité au travers de l'échangeur afin de s'adapter au taux de conversion souhaité.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 montre, en coupe, une unité d'échange de pression dont la partie centrale est constituée d'un corps cylindrique dans lequel coulisse un piston relié par une bielle au vilebrequin ;
- la figure 2 montre un échangeur de pression volumétrique comprenant cinq unités d'échange de pression du type montré dans la figure 1, montées en parallèle.

### EXPOSE DETAILLE DE L'INVENTION

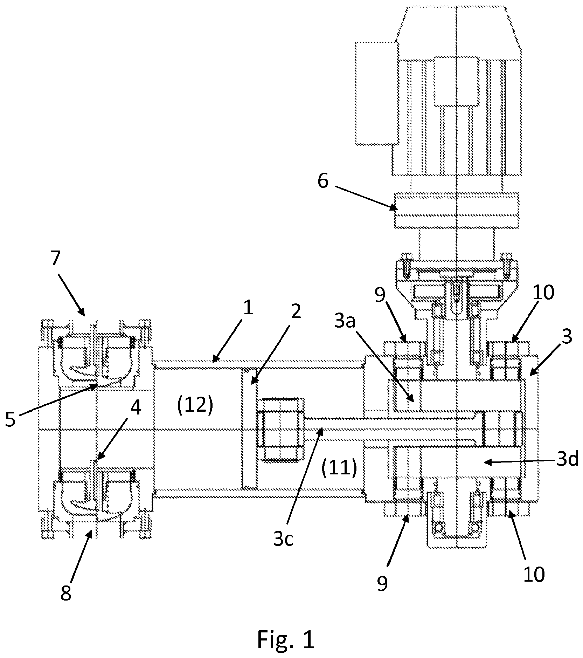

La figure 1 montre une unité d'échange de pression dont la partie centrale est constituée d'un corps cylindrique (1) dans lequel coulisse un piston (2) relié par une bielle (3c) au vilebrequin (3d), formant un embiellage distributeur (3). Le piston (2) sépare de façon étanche l'intérieur du corps cylindrique (1) en une chambre aval et une chambre amont. Le corps cylindrique (1) est prolongé à sa première extrémité, du côté de la chambre aval, d'un bloc qui est solidarisé de manière étanche avec le corps cylindrique (1) par des moyens de type joints et boulons, en soi connus.

Le bloc inclus un orifice d'admission d'amenée d'eau de mer à traiter avec clapet d'admission anti-retour (4) en soi connu de l'homme du métier. Le bloc inclus également un orifice de refoulement amenant l'eau de mer au MOI comprenant également un clapet anti-retour (5).

L'autre extrémité du corps cylindrique (1), du côté de la chambre amont, est prolongée par un bloc intégrant l'embiellage distributeur (3) solidarisé par des moyens de type joints et boulons, en soi connus.

Les manivelles de l'embiellage (3) comprennent chacune un orifice d'alimentation (3a) de forme particulière mettant alternativement à chaque tour en communication les entrées du concentrât pressurisé avec la chambre amont du cylindre (1) et les sorties du concentrât, dont on a récupéré l'énergie, en communication avec la chambre amont du cylindre (1). A noter que le système réalise la distribution et l'étanchéité des différentes voies sans poussée axiale sur le vilebrequin (3d).

L'axe du vilebrequin (3d) est relié à un dispositif d'entrainement lui-même entrainé par un ou des moteurs (6) au moyen, par exemple, d'engrenages. Le ou les moteurs (6) assurent la rotation de l'embiellage distributeur (3) à vitesse contrôlée par variateur de fréquence pour adapter au taux de conversion souhaité et apportent l'énergie nécessaire à la compensation des pertes de charge des MOI avec un rendement très élevé comparativement au processus habituel ou la remontée de pression est réalisée par une pompe booster centrifuge indépendante.

L'unité d'échange de pression dont la structure vient d'être décrite ci-dessus fonctionne comme suit:
L'eau de mer, fournie par une pompe de gavage de l'installation de dessalement, pénètre dans le bloc par le clapet (4) et donc à l'intérieur de la chambre aval du corps cylindrique (1), sans régulation de pression d'entrée, et en ressort par le clapet de refoulement (5). Le vilebrequin (3d) est en rotation permanente.

Au début d'un cycle, lorsque le piston (2) est à droite en position d'inversion de mouvement les orifices d'alimentation (3a) en concentrât rentrent en communication avec les entrées haute pression, le concentrât pénètre à l'intérieur de la chambre amont du corps cylindrique (1), la chambre aval étant remplie d'eau de mer.

Le piston se déplace vers la gauche en refoulant l'eau de mer brute par le clapet (5), poussé par le concentrât et aidé par les moteurs d'entrainement avec une dépense d'énergie correspondante à la remontée de pression nécessaire.

Quand le piston arrive en fin de course vers la gauche, simultanément les orifices (3a) ferment la communication avec les entrées haute pression de concentrât et ouvrent la communication avec les sorties du concentrât dont on a prélevé l'énergie. La dépression consécutive des deux côtés du piston (2) provoque la fermeture du clapet (5), l'eau de mer brute fournie par une pompe de gavage de l'installation pénètre par le clapet (4) et repousse le piston (2) vers la droite en refoulant le concentrât pour un nouveau cycle. Contrairement aux systèmes connus le surplus éventuel d'énergie contenu dans l'eau de mer en provenance de la pompe de gavage est récupéré et aide les moteurs pour assurer la rotation et la remontée de pression. En cas d'insuffisance de pression d'alimentation, rédhibitoire dans les autres systèmes connus, les moteurs amènent l'énergie nécessaire à l'évacuation du concentrât.

Pour plus de précision, ci-dessous les références sur la figure 1 relatives à la position de l'eau à traiter et traitée :
(7) : sortie eau brute haute pression ;
(8) : entrée eau brute basse pression ;
(9) : entrée eau sursalée haute pression ;
(10) : sortie eau sursalée basse pression ;
(11) : eau sursalée ;
(12) : eau brute.

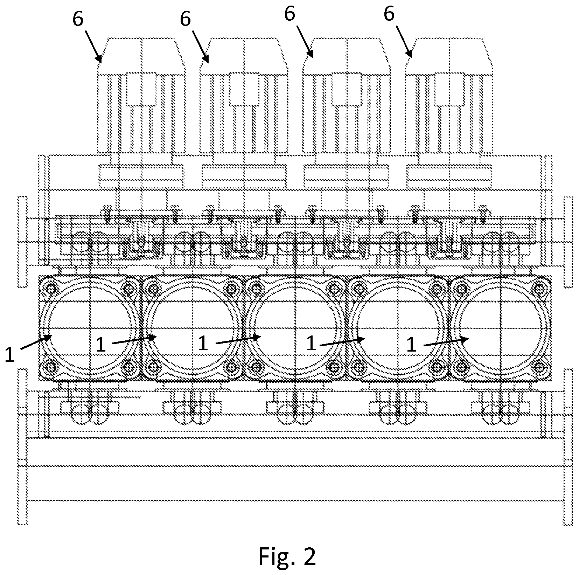

La figure 2 montre un échangeur de pression volumétrique comprenant cinq unités d'échange de pression du type montré dans la figure 1, montées en parallèle. Des motoréducteurs électriques assurent la rotation des cinq embiellages distributeurs calés à 72° les uns des autres de sorte à assurer un fonctionnement régulier du système.

Le nombre, le diamètre, la course des cylindres définis le système est un débitmètre de grande précision; cette caractéristique permet, avec un simple contrôleur, de varier la vitesse de rotation pour adapter le débit traversant l'échangeur de pression au taux de conversion souhaité.

En résumé, l'échangeur de pression volumétrique selon l'invention offre les caractéristiques et avantages suivants :
- faible consommation énergétique du système de distribution ;
- remontée de pression par le système volumétrique avec rendement supérieur aux pompes centrifuges et sans consommation de débit de concentrât pour la fonction ;
- pas de mélange concentrât/eau de mer du fait de l'étanchéité totale du piston séparateur;
- pas de fuite du système distributeur du fait des bagues d'étanchéité poussées ;
- récupération partielle de l'énergie contenue dans l'eau brute amenée par les pompes de gavage ;
- pas de régulations nécessaires sur l'alimentation en eau brute, la sortie eau brute haute pression, l'alimentation concentrât haute pression ni la sortie concentrât basse pression ;
- adaptabilité au taux de conversion souhaité par contrôle de la vitesse de rotation ;
- pas de risques de coups de bélier ;
- fonctionnement peu bruyant ;
- possibilité de très haut débit ;
- faible encombrement, tuyauteries de liaison peu nombreuses et courtes ;
- maintenance simple et peu onéreuse ;
- le système ne nécessite pas de filtration de l'eau en dessous de 50 microns.

## Revendications

1. Échangeur de pression volumétrique à effet booster et mesure de débit comprenant au moins une unité d'échange de pression avec un corps cylindrique (1) creux, un piston (2) coulissant dans ledit corps, ledit piston (2) comprenant une tête de piston (2) séparant l'intérieur dudit corps cylindrique (1) en une chambre aval et une chambre amont, ladite chambre aval étant munie d'un dispositif d'admission et de refoulement d'eau à traiter, ***caractérisé* en ce que** ladite chambre amont est munie d'un embiellage (3) distributeur motorisé à cinq voies, comprenant, pour équilibrage hydraulique, deux orifices d'alimentation (3a) en liquide pressurisé, deux orifices d'évacuation dudit liquide et une ouverture en communication avec ladite chambre amont.

2. Échangeur selon la revendication 1, ***caractérisé* en ce que** ledit embiellage (3) distributeur est équilibré hydrauliquement pour supprimer la contrainte axiale sur l'axe de rotation du distributeur.

3. Échangeur selon les revendications 1 et 2, ***caractérisé* en ce que** l'embiellage (3) distributeur motorisé assure la remontée de pression due aux pertes de charges des MOI avec un très haut rendement, sans pompe externe ni consommation de débit.

4. Échangeur selon l'une des revendications précédentes, ***caractérisé* en ce que** les manivelles de l'embiellage (3) distributeur présentent des ouvertures symétriques conformées de façon à permettre alternativement une mise en communication et une fin de communication fluides avec les orifices d'alimentation (3a) et d'évacuation de l'échangeur.

5. Échangeur selon l'une quelconque des revendications précédentes, ***caractérisé* en ce qu'**il comprend une pluralité d'unités.

6. Échangeur selon la revendication 5, ***caractérisé* en ce que** les embiellages (3) sont calés de manière également répartie sur 360° suivant le nombre d'unités.

7. Échangeur selon les revendications 1 et 5, ***caractérisé* en ce que** la cylindrée connue, la vitesse de rotation contrôlée de l'embiellage (3) et le nombre d'unités informent avec précision du débit traversant l'échangeur.

8. Échangeur selon les revendications 1, 3, 5 et 6, ***caractérisé* en ce que** l'énergie arrivant par l'orifice d'admission de la chambre aval est récupérée par l'embiellage (3) et aide à la remontée de pression.

9. Installation de dessalement contenant un échangeur de pression volumétrique selon l'une quelconque des revendications 1 à 8, ***caractérisée* en ce que** le nombre d'unités d'échange de pression, l'alésage et la course des corps cylindriques (1) sont ajustés en fonction du débit disponible de concentrât de l'installation.

10. Installation selon la revendication 9, ***caractérisée* en ce que** la vitesse de rotation des embiellages (3) distributeurs varie de façon à ce que le taux de conversion souhaité soit ajusté automatiquement.

## Patentansprüche

1. Volumetrischer Druckaustauscher mit Booster-Effekt und Durchflussmessung, umfassend mindestens eine Druckaustauscheinheit mit einem hohlen zylindrischen Körper (1), einem in diesem Körper gleitenden Kolben (2), wobei der Kolben (2) einen Kolbenkopf (2) umfasst, der das Innere des zylindrischen Körpers (1) in eine stromabwärts gelegene Kammer und eine stromaufwärts gelegene Kammer trennt, wobei die stromabwärts gelegene Kammer mit einer Vorrichtung für den Einlaß und den Auslaß des zu behandelnden Wassers versehen ist, **dadurch gekennzeichnet, daß** die stromaufwärts gelegene Kammer mit einem motorisierten Fünf-Wege-Verteilergestänge (3) versehen ist, das für den hydraulischen Ausgleich zwei Öffnungen (3a) für die Zufuhr von unter Druck stehender Flüssigkeit, zwei Öffnungen für die Entleerung der Flüssigkeit und eine mit der stromaufwärts gelegenen Kammer in Verbindung stehende Öffnung aufweist.

2. Druckaustauscher nach Anspruch 1, **dadurch gekennzeichnet, dass** das Verteilergestänge (3) hydraulisch ausgeglichen ist, um axiale Spannungen auf der Drehachse des Verteilers zu beseitigen.

3. Druckaustauscher nach den Ansprüchen 1 und 2, **dadurch gekennzeichnet, dass** das motorisierte Verteilergestänge (3) für eine Rückgewinnung des Drucks aufgrund der Druckabfälle aus dem ROM mit einem sehr hohen Wirkungsgrad sorgt, ohne eine externe Pumpe oder einen Verbrauch von Durchfluss.

4. Druckaustauscher nach einem der vorhergehenden Ansprüche, **dadurch gekennzeichnet, dass** die Kurbeln des Verteilergestänges (3) symmetrische Öffnungen aufweisen, die so geformt sind, dass sie eine abwechselnde Fluidverbindung und eine End-zu-Fluid-Verbindung mit den Zufuhr- (3a) und Evakuierungsöffnungen des Druckaustauschers ermöglichen.

5. Druckaustauscher nach einem der vorhergehenden Ansprüche, **dadurch gekennzeichnet, dass** er mehrere Einheiten umfasst.

6. Druckaustauscher nach Anspruch 5, **dadurch gekennzeichnet, dass** die das Verteilergestänges (3) in Abhängigkeit von der Anzahl der Einheiten gleichmäßig auf 360 verteilt sind.

7. Druckaustauscher nach einem der Ansprüche 1 und 5, **dadurch gekennzeichnet, dass** die bekannte Verschiebung, die kontrollierte Drehgeschwindigkeit das Verteilergestänge (3) und die Anzahl der Einheiten genau über den Durchsatz des Druckaustauschers informieren.

8. Druckaustauscher nach einem der Ansprüche 1, 3, 5 und 6, **dadurch gekennzeichnet, dass** die über die Einlassöffnung der stromabwärts gelegenen Kammer ankommende Energie über das Verteilergestänge (3) zurückgewonnen wird und zur Erhöhung des Drucks beiträgt.

9. Entsalzungsanlage mit einem volumetrischen Druck nach einem der Ansprüche 1 bis 8, **dadurch gekennzeichnet, dass** die Anzahl der Druckaustauscheinheiten, die Bohrung und der Hub der zylindrischen Körper (1) in Abhängigkeit vom verfügbaren Konzentratdurchsatz der Anlage eingestellt werden.

10. Anlage nach Anspruch 9, **dadurch gekennzeichnet, dass** die Drehzahl das Verteilergestänge (3) derart variiert, dass der gewünschte Umwandlungsgrad automatisch eingestellt wird.

## Claims

1. Volumetric pressure exchanger with a booster effect and flow measurement, comprising at least one pressure exchange unit with a hollow cylindrical body (1), a piston (2) sliding in said body, said piston (2) comprising a piston head (2) separating the interior of said cylindrical body (1) into a downstream chamber and an upstream chamber, said downstream chamber being provided with a device for the admission and discharge of water to be treated, **characterized in that** said upstream chamber is provided with a five-way motorized distributor linkage (3) comprising, for hydraulic balancing, two pressurized liquid supply orifices (3a), two orifices for evacuating said liquid and an opening which is in communication with said upstream chamber.

2. Exchanger according to claim 1, **characterized in that** said distributor linkage (3) is hydraulically balanced in order to remove axial stress on the axis of rotation of the distributor.

3. Exchanger according to claims 1 and 2, **characterized in that** the motorized distributor linkage (3) provides for recovery of the pressure due to the pressure drops from the ROM with a very high efficiency, without an external pump or consumption of flow.

4. Exchanger according to any one of the preceding claims, **characterized in that** the cranks of the distributor linkage (3) have symmetrical openings which are shaped so as to allow alternate fluid communication and an end to fluid communication with the supply (3a) and evacuation orifices of the exchanger.

5. Exchanger according to any one of the preceding claims, **characterized in that** it comprises a plurality of units.

6. Exchanger according to claim 5, **characterized in that** the linkages (3) are offset in a manner which is evenly distributed over 360° depending on the number of units.

7. Exchanger according to claims 1 and 5, **characterized in that** the known displacement, the controlled speed of rotation of the linkage (3) and the number of units accurately inform of the throughput of the exchanger.

8. Exchanger according to claims 1, 3, 5, and 6, **characterized in that** the energy arriving via the inlet orifice of the downstream chamber is recovered via the linkage (3) and assists in raising the pressure.

9. Desalination Installation containing a volumetric pressure according to any one of claims 1 to 8 **characterized in that** the number of pressure exchange units, the bore and the stroke of the cylindrical bodies (1) are adjusted as a function of the available throughput of concentrate for the installation.

10. Installation according to claim 9, **characterized in that** the rotational speed of the distributor linkages (3) varies in a manner such that the desired degree of conversion is automatically adjusted.
